Europäisches Patentamt

European Patent Office

Office européen des brevets

(11) Numéro de publication : **0 367 918 B1**

# (12) FASCICULE DE BREVET EUROPEEN

(45) Date de publication du fascicule du brevet :
**03.06.92 Bulletin 92/23**

(51) Int. Cl.⁵ : **A23C 9/123**

(21) Numéro de dépôt : **89114989.0**

(22) Date de dépôt : **14.08.89**

(54) **Produit lacté acidifié à consistance crémeuse.**

(30) Priorité : **06.10.88 CH 3713/88**

(43) Date de publication de la demande :
**16.05.90 Bulletin 90/20**

(45) Mention de la délivrance du brevet :
**03.06.92 Bulletin 92/23**

(84) Etats contractants désignés :
**AT BE DE ES FR GB GR IT LU NL SE**

(56) Documents cités :
**EP-A- 0 111 020**
**EP-A- 0 144 274**
**FR-A- 1 263 214**
**US-A- 4 339 464**
**JOURNAL OF DAIRY SCIENCE, vol. 67, no. 4, avril 1984, pages 735-744; D. MACURA et al.: "Scandinavian ropy milk -identification and characterization of endogenous ropy lactic streptococci and their extracellular excretion"**

(56) Documents cités :
**DEUTSCHE MOLKEREI-ZEITUNG, vol. 109, no. 36, 8 septembre 1988, pages 1094-1097; M. DESMAZEAUD: "Metabolismus der thermo-philenMilchsäurebakterien"**
**DEUTSCHE MOLKEREI-ZEITUNG, vol. 34, 1971, pages 1460-1463; G. BUSCH JOHANS-SEN et al.: "Yoghurt-Herstellung dur-chlangzeitsäuerung bei 30 Graden Celsius"**

(73) Titulaire : **SOCIETE DES PRODUITS NESTLE S.A.**
**Service des Brevets Case postale 353**
**CH-1800 Vevey (CH)**

(72) Inventeur : **Hose, Hugh**
**Entremonts 28**
**CH-1400 Yverdon (CH)**
Inventeur : **Sozzi, Tomaso**
**Ch. des Abeilles 6**
**CH-1010 Lausanne (CH)**
Inventeur : **Wood, Robert Dustan**
**Ch. de la Croix 29**
**CH-1052 Le Mont-s/Lausanne (CH)**

**Description**

La présente invention a pour objet un produit lacté acidifié à consistance crémeuse ainsi qu'un procédé de fabrication d'un tel produit.

Parmi les produits lactés acidifiés à consistance fluide et onctueuse connus, on peut citer par exemple les yogourts liquides.

Un yogourt liquide connu en Europe et au Japon diffère d'un yogourt standard notamment par sa plus haute teneur en matière grasse, par sa plus faible teneur en matière sèche totale, et par le fait qu'il a été soumis à une homogénéisation.

Un yogourt liquide maigre semble difficilement obtenable sans addition d'un stabilisant. C'est ainsi que dans un procédé connu d'obtention d'un yogourt liquide maigre, on part d'un lait écrémé additionné de quelques % de sucre de canne et de 0,2-0,3% d'un stabilisant optionnel comprenant un mélange de gélatine et d'agar-agar, on inocule ce lait avec une culture de yogourt comprenant une souche de Lactobacillus bulgaricus et une souche de Streptococcus thermophilus capable de produire un stabilisant in situ, et l'on conduit la fermentation durant 8-15 h à 38-45°C jusqu'à ce que le pH descende à 4,3.

Mais aucun de ces yogourts liquides ne pourrait être utilisé pour blanchir un café chaud par exemple, à la place de crème ou de crème à café par exemple, car il coagulerait.

On peut également citer un produit lacté connu dit hypolipidique destiné notamment à former une base pour réaliser différents types de sauces. Dans son procédé de fabrication, on acidifie biologiquement un lait jusqu'à un pH inférieur à 4,5, on y incorpore de l'amidon, de l'huile végétale et des stabilisants, on chauffe sous agitation réduite très progressivement jusqu'à 90°C, on lisse le produit et on le conditionne à 90-95°C. Un tel produit ne peut être fabriqué sans avoir recours à des stabilisants tels que carragheenanes et gommes.

La présente invention a pour but de proposer un produit lacté acidifié à consistance crémeuse qui puisse contenir peu, voir pratiquement aucune matière grasse, quine coagule ni au cours d'une stérilisation ni lorsqu'on le verse par exemple dans du café chaud et qui ne sédimente pas lors d'une conservation prolongée en emballage hermétique, sans qu'il doive contenir pour autant un agent stabilisant ajouté.

C'est ainsi que le produit lacté acidifié susceptible d'être obtenu par le procédé selon la présente invention présente:

i) une consistance crémeuse

ii) une viscosité de 1,6-4, 2 mPa.s à 18-22°C,

iii) un pH de 6,2-6,5 à 18-22°C, et

iv) une teneur en matière sèche de 7-45% en poids, dont:

    – 0,03-22,5% de matière grasse, et

    – 6,97-22,5% de solides non gras comprenant des protéines, des sucres et des agents filant et épaississant non ajoutés.

A cet effet, dans le procédé selon la présente invention:

a) on prépare une suspension aqueuse lactée présentant une teneur en matière sèche de 7-45% en poids, dont:

    – 0,03-22,5% de matière grasse, et

    – 6,97-22,5% de solides non gras comprenant des protéines et des sucres fermentescibles,

b) on ajuste le pH de la suspension à 6,8-7,4, et

c) on acidifie la suspension par fermentation durant 1,5-10 h avec une combinaison de souches de Lactobacillus bulgaricus filant et de Streptococcus épaississant, jusqu'à ce que le pH soit de 6,2-6,5 à 18-22°C, lesdites souches de Lactobacillus filant et de Streptococcus épaissant étant susceptibles d'acidifier une suspension lactée à partir d'un pH neutre jusqu'à un pH désiré de environ 6,2-6,5 tout en produisant suffisamment d'agents filants et épaississants pour conférer à la suspension lactée une consistance crémeuse.

On a constaté que, de manière surprenante, il est possible de fournir ainsi un produit lacté acidifié à consistance crémeuse qui puisse contenir aussi peu de matière grasse qu'on le désire, qui soit stable à la chaleur et à un environnement acide tel que le café par exemple, qui se conserve des mois à température ambiante sans former de dépôt et quine contienne aucun agent stabilisant ajouté.

De même on a constaté qu'il est possible, de manière surprenante, par une acidification par fermentation dans une gamme de pH relativement élevée et étroite, d'obtenir un produit qui présente à la fois la consistance crémeuse désirée et la stabilité voulue, sans avoir recours à un agent stabilisant ajouté.

On a constaté en particulier qu'il est possible de trouver, parmi les Lactobacillus bulgaricus filants et les Streptococcus épaississants par exemple, notamment parmi ceux qui sont directement obtenables dans le commerce ou ceux que l'on peut isoler de produits du commerce tels que des yogourts ou des laits et crèmes crus, des souches susceptibles d'acidifier une suspension lactée à partir d'un pH neutre de environ 6,8-7,4

2

EP 0 367 918 B1

jusqu'à un pH désiré de environ 6,2-6,5 tout en produisant suffisamment d'agents filants et épaississants pour conférer à la suspension lactée une consistance crémeuse.

C'est le fait de pouvoir rester à un pH aussi élevé après acidification qui est en soi très surprenant et qui entraîne alors une stabilité étonnante du produit aussi bien à la stérilisation qu'au café chaud p.ex. ainsi qu' à la conservation prolongée en emballage hermétique.

Dans le présent exposé, l'expression "stabilité du produit au café chaud" signifie l'absence de toute coagulation du produit, autrement dit l'absence de formation de granules de coagulum, lorsqu'on verse le produit dans un liquide présentant une température d'environ 80°C et un pH d'environ 5 tel qu'une tasse de café chaud préparée par infusion de café rôti et moulu ou par reconstitution d'un café soluble.

De même, l'expression "stabilité du produit à la stérilisation" signifie l'absence de toute coagulation du produit lors d'un traitement thermique, par chauffage indirect dans le cas particulier, à des températures supérieures à 100°C durant quelques minutes par exemple.

L'expression "stabilité du produit à la conservation" signifie l'absence de toute sédimentation du produit au cours d'une conservation en emballage hermétique d'au moins trois mois à température ambiante.

Les expressions "produit lacté" et "suspension aqueuse lactée" signifient produits et suspensions que l'on peut obtenir à partir d'un lait animal, d'un lait végétal, ou d'un mélange de composants d'un lait animal avec des composants de substitution d'origine végétale, qui présentent une composition et une apparence identiques ou semblables à celles d'un produit ou d'une suspension analogues obtenus à partir du lait de vache.

L'expression "consistance crémeuse" signifie consistance à la fois visqueuse et onctueuse semblable à celle présentée par la crème fraîche obtenue par écrémage d'un lait de vache. La consistance visqueuse, autrement dit la viscosité est déterminée à l'aide d'un test spécifique décrit ci-après juste avant les exemples. La consistance onctueuse par contre ne peut guère être définie par une grandeur physique et elle est appréciée au cours de tests de dégustation organoleptiques.

Le produit lacté acidifié selon la présente invention présente donc une consistance crémeuse due aux agents filants et épaississants qu'il renferme. Ces agents n'ont pas été ajoutés mais ils ont été produits in situ au cours de l'acidification par fermentation.

Ces agents peuvent avoir été produits in situ par fermentation avec des souches directement achetées dans le commerce, ou avec des souches isolées de produits du commerce, notamment de yogourts ou de laits et crèmes crus, on encore avec des souches obtenues dans des collections officielles.

De préférence, ces agents ont été produits in situ par fermentation avec une combinaison de souches de Lactobacillus bulgaricus filant et de Streptococcus épaississant. Dans cette combinaison, chaque souche semble jouer un rôle distinct. Le Lactobacillus bulgaricus filant semble produire un agent ou polysaccharide à effet filant conférant au produit lacté sa viscosité. Le Streptococcus épaississant semble produire un agent ou polysaccharide à effet épaississant conférant au produit lacté son onctuosité.

Un Lactobacillus bulgaricus filant utilisable dans le cadre de la présente invention peut se trouver en particulier dans des cultures courantes de yogourt. Sa température de croissance optimale est de environ 40-42°C, mais il peut également être actif à une température aussi basse que environ 32°C ou aussi élevée que 45°C. Une souche de Lactobacillus bulgaricus de ce type, isolée d'un yogourt du commerce, a été déposée en vertu du Traité de Budapest le 04.10.88 à la Collection Nationale de Cultures de Microorganismes (CNCM) de l'Institut Pasteur, 25 rue du Docteur ROUX, 75724 Paris Cedex 15, France, où elle a reçu le No I-800.

Un Streptococcus épaississant utilisable dans le cadre de la présente invention peut se trouver plus particulièrement dans des produits laitiers naturellement épais ou onctueux tels que des yogourts, des crèmes fraîches, ou des crèmes aigres courantes. Un Streptococcus épaississant particulièrement recommandable dans le cadre de la présente invention se distingue, d'une part, par un comportement biochimique identique à celui du Streptococcus cremoris tel que déterminé par le test API (R.Maissin et al, Belgian Journal of Food Chemistry and Biotechnology, 42/6 (1987), 176-183), et d'autre part, par une aptitude à travailler non seulement dans le domaine de environ 27-32°C typique d'une souche mésophile mais encore dans la plage de température s'élevant de 32°C à environ 40°C. Un tel Streptococcus épaississant est capable en outre de conférer au produit acidifié un arôme agréable. Quelques souches de Streptococcus de ce type ont été déposées en vertu du Traité de Budapest le 04.10.88 à la Collection Nationale de Cultures de Microorganismes (CNCM) de l'Institut Pasteur, 25 rue du Docteur ROUX, 75724 Paris Cedex 15, où elle ont reçu les Nos respectifs I-801, I-802, et I-803. La première de ces trois souches a été isolée d'une crème aigre du commerce. La seconde a été isolée d'un kefir du commerce. La troisième est une souche mutante, distincte quant à la texture produite durant l'acidification, d'une souche de Streptococcus cremoris déposée le 21.11.84 à la CNCM où elle porte le No 370.

La composition de la suspension aqueuse lactée de départ du procédé selon la présente invention et la composition du produit lacté acidifié selon la présente invention présentent entre elles les différences inhérentes au fait que la seconde est le produit de la fermentation de la première. On ne retrouve donc pas dans la seconde les substances que les microorganismes ont consommé au cours de la fermentation et on ne trouve

3

pas dans la première les produits de la fermentation de ces substances, à savoir les microorganismes eux-mêmes et les métabolites sécrétés par les microorganismes, dont principalement lesdits agents filants et épaississants. Cependant, les quantités de matière sèche consommées au cours de la fermentation ne représentent qu'une fraction de pour-cent de la suspension. On peut donc considérer la composition globale de la suspension de départ et celle du produit final comme très semblables, les différences principales se remarquant surtout sur le plan de la texture, du pH et des propriétés telles que la stabilité à la stérilisation, aux milieux acides, notamment au café chaud et à la conservation.

C'est ainsi que le produit lacté acidifié selon la présente invention et la suspension aqueuse lactée préparée dans le procédé selon la présente invention présentent donc chacun une teneur en matière sèche de environ 7-45% en poids, dont environ 0,03-22,5% de matière grasse et au moins environ 6,97% de solides non gras.

Une teneur en solides non gras inférieure à 6,97% a pour conséquence que le produit lacté acidifié ne peut pas présenter la texture crémeuse désirée et demeure trop fluide, l'effet épaississant de la fermentation ne pouvant pas être obtenu. Une teneur en solides non gras supérieure à 22,5% a pour conséquence l'inhibition de la fermentation.

Les solides non gras de ladite suspension aqueuse lactée présentent de préférence une composition identique ou semblable à celle des solides non gras d'un lait de vache. Ils comprennent en particulier les substances nutritives nécessaires à la croissance et à l'activité des microorganismes impliqués dans la fermentation. Ils comprennent donc en particulier des sucres fermentescibles, des protéines, des oligoéléments et des vitamines. Les sucres fermentescibles peuvent être le lactose, le glucose et/ou le saccharose p.ex. Les protéines peuvent être d'origine animale, telles que la caséine et la lactalbumine, ou d'origine végétale, telles que les protéines de céréales ou de légumineuses, notamment du soya p.ex.

Le domaine de la teneur en matière sèche du dit produit lacté acidifié et de ladite suspension aqueuse lactée s'étend donc de 7-45%. La différence de 0,03% entre la teneur minimale en matière sèche et la teneur minimale en solides non gras reflète le fait qu'il est impossible d'éliminer complètement la matière grasse résiduelle d'un lait écrémé p.ex. La teneur maximale en matière sèche est égale à la somme de la teneur maximale en matière grasse prévue et de la teneur maximale en solides non gras au-delà de laquelle la fermentation est inhibée.

Dans la pratique, on peut choisir une teneur en matière grasse faible, voire aussi faible que possible si l'on désire obtenir un produit lacté acidifié à texture crémeuse hypocalorique utilisable par exemple pour blanchir le café. On peut choisir des teneurs en matière grasse plus élevées, voire aussi élevées que 22,5% si l'on désire obtenir un produit lacté acidifié utilisable p.ex. comme base pour sauces. Avec des teneurs en matière grasse supérieures à 22,5%, le produit risque de ne plus être assez liquide pour que l'effet filant et épaississant de la fermentation soit perceptible. Les matières grasses peuvent être d'origine animale, telles que la crème de lait de vache p.ex., ou d'origine végétale, telles que la graisse de coco p. ex.

Pour mettre en oeuvre le procédé selon la présente invention, on prépare donc une suspension aqueuse lactée présentant la composition décrite ci-dessus. Pour ce faire, on peut concentrer ou standardiser un lait de vache écrémé ou non, frais ou reconstitué à partir de lait en poudre p.ex. On peut aussi mélanger et/ou standardiser des laits de différentes provenances animales ou végétales, notamment des laits de soya fraîchement préparés ou en poudre p.ex. La standardisation à une composition entrant dans le cadre de la présente invention peut se réaliser par addition de solides non gras du lait, de protéines végétales, de sucres fermentescibles, de crème ou de matière grasse végétale p.ex.

On peut homogénéiser cette suspension aqueuse lactée, après un préchauffage éventuel à 45-75°C p.ex., sous une pression de environ 150 à 400 bar p.ex. On peut alors pasteuriser cette suspension à une température de environ 75 à 95°C durant environ 30 s - 15 min p.ex., ou la stériliser à 110-150°C durant 10s-30 min p.ex.

On peut ensuite ajuster le pH de cette suspension aqueuse lactée à une valeur comprise entre environ 6,8 et 7,4, de préférence 6,9-7,1, par addition de KOH ou NaOH p.ex. Cet ajustement a pour but de donner aux microorganismes utilisés pour la fermentation une marge d'acidification assez grande pour qu'ils puissent produire une quantité suffisante d'agents filant et épaississant.

On peut inoculer cette suspension avec environ 1,05-6% en volume d'un mélange de cultures comprenant 1-4% d'une culture de Lactobacillus bulgaricus filant et 0,05-2% d'une culture de Streptococcus épaississant, chacune de ces cultures distinctes contenant une souche du microorganisme concerné à raison de $10^8$-$10^9$ germes/$cm^3$.

On peut alors laisser fermenter, de préférence en cuve, à une température de 30-40°C, de préférence 34-36°C, favorable à la croissance de chacune des deux souches formant ladite combinaison, durant environ 1,5-10 h, de préférence 2-6 h, jusqu'à ce que le pH présente une valeur de 6,2-6,5 mesurée à 18-22°C.

Si l'on laisse fermenter jusqu'à un pH inférieur à 6,2, le produit lacté acidifié risque de ne pas présenter la stabilité désirée, en particulier la stabilité à la chaleur et aux milieux acides. Si l'on ne laisse pas fermenter jusqu'à un pH d'au plus 6,5, la production d'agents filants et épaississants risque d'être insuffisante.

D'autre part, si le temps nécessaire pour atteindre le pH désiré est trop court, à savoir inférieur à 1,5 h, voire à 2 h, le produit risque de coaguler avant de présenter la viscosité désirée. Si le temps nécessaire pour atteindre le pH désiré est trop long, à savoir supérieur à 10 h, voire à 6 h, on court un risque de contamination par une souche étrangère au procédé qui prendrait le relais des souches du procédé.

On peut pasteuriser le produit lacté acidifié à une température de environ 75-95°C durant environ 30 s - 15 min p.ex., de manière à arrêter complètement le métabolisme des microorganismes utilisés. On peut réaliser cette pasteurisation en tube p.ex., après avoir refroidi le lait à 15-28°C p.ex.

On peut alors conditionner le produit lacté acidifié en emballages hermétiques tels que coupelles métallisées ou bouteilles de verre p.ex. et le stériliser dans cet emballage à 110-130°C durant 1-60 min p.ex. On peut aussi le stériliser par chauffage indirect avant un conditionnement aseptique en emballages hermétiques en matière plastique ou en carton plastifié p.ex.

Le produit lacté acidifié ainsi obtenu présente donc une consistance crémeuse et il ne précipite ni à la stérilisation, ni lorsqu'on le verse p.ex. dans une tasse de café chaud en lieu et place de crème ou de crème à café du commerce. Il se conserve très bien en emballage hermétique où il ne présente aucune sédimentation après une conservation de au moins trois mois à température ambiante p.ex. Ce produit lacté acidifié se prête également à la préparation de sauces et potages, en guise de base à consistance crémeuse.

Les exemples ci-après sont présentés à titre d'illustration du produit et du procédé selon la présente invention. Les pourcentages et parties y sont donnés en poids sauf indication contraire.

Ces exemples sont précédés de la description d'un test utilisé pour déterminer la viscosité du présent produit. Ils sont complétés par des exemples comparatifs illustrant le fait que d'une part la valeur du pH atteint lors de l'acidification par fermentation est particulièrement critique, et que d'autre part l'utilisation d'une seule des deux souches formant la combinaison préconisée est vouée à l'échec.

## Test de viscosité

Le test consiste à mesurer le temps mis par 100 ml de liquide pour s'écouler à travers un tube cylindrique vertical de 17 mm de hauteur et 2,8 mm de diamètre.

On admet que le produit lacté acidifié selon la présente invention est un liquide newtonien au même titre que l'eau. On admet donc que le débit du présent produit et le débit de l'eau dans un même tube cylindrique sont inversement proportionnels à leurs viscosités respectives.

La viscosité du produit selon la présente invention est donc égale à la viscosité de l'eau (1 mPa.s divisée par le temps mesuré par le présent test pour l'eau (12 s) et multipliée par le temps mesuré par le présent test pour le présent produit.

## Exemple 1

On prépare 500 kg de suspension aqueuse lactée en mélangeant 79,5% d'eau, 17% de poudre de lait de vache écrémé, 3,4% de beurre et 0,1% d'extrait de levure.

On préchauffe la suspension à 70°C par échange de chaleur et on la stérilise par injection de vapeur à 140°C durant 10 s.

On refroidit la suspension à 60-65°C par détente et échange de chaleur. On ajuste son pH à 7,1 par addition d'un mélange de KOH et NaOH et on l'homogénéise sous une pression de 180 bar.

On refroidit la suspension à 34°C par échange de chaleur et on en remplit une cuve d'acidification. On inocule la suspension avec 10 l d'une culture du Lactobacillus bulgaricus filant CNCM I-800 contenant $10^8$-$10^9$ germes de ce microorganisme par cm$^3$, et avec 250 cm$^3$ d'une culture du Streptococcus cremoris épaississant CNCM I-801 contenant $10^8$-$10^9$ germes de ce microorganismes par cm$^3$.

On laisse fermenter durant 4 h à 34°C. On commence alors à soutirer le produit acidifié qui présente un pH de 6,32 (environ 6,42 à 20°C) et une viscosité de 1,96 mPa.s.

Par échange de chaleur, on refroidit tout d'abord à 15°C le produit soutiré puis on le pasteurise à 75°C durant 3 min pour d'abord ralentir la fermentation puis inactiver les microorganismes. On conduit le produit soutiré et pasteurisé dans une cuve d'attente où on le refroidit et le maintient à 8°C.

Au cours de l'opération de soutirage qui dure environ 17 min, la fermentation continue dans la cuve d'acidification. Le produit soutiré à la fin de cette opération présente un pH de 6,26 (environ 6,36 à 20°C) et une viscosité de 2,83 mPa.s.

Le produit accumulé dans la cuve d'attente présente un pH de 6,4 à 20°C et une viscosité de 2,1 mPa.s à 20°C. Il a une consistance crémeuse et présente en particulier en bouche une onctuosité comparable à celle de la crème liquide fraîche de lait de vache. Il est stable au café chaud.

On conditionne une partie de ce produit dans des bouteilles de verre de 2 dl et une autre partie dans des coupelles métallisées de 12 ml.

On stérilise le produit en bouteilles durant 2 min à 122°C et le produit en coupelles durant 2,5 min à 121°C. Le produit stérilisé en bouteilles présente à 20°C un pH de 6,3 et une viscosité de 3,29 mPa.s Le produit stérilisé en coupelles présente à 20°C un pH de 6,3 et une viscosité de 2,56 mPa.s.

Les deux produits stérilisés ont une consistance crémeuse et présentent en particulier en bouche une onctuosité comparable à celle de la crème liquide fraîche de lait de vache. Ils sont stables au café chaud. Ils sont également stables à la conservation. Ils ne présentent en effet aucune trace de sédimentation après une conservation de trois mois à température ambiante.

## Exemple comparatif A

On procède de manière semblable à celle décrite à l'exemple 1, à l'exception du fait que l'on prépare une quantité quatre fois plus grande de suspension aqueuse lactée et que l'on laisse par erreur la fermentation se poursuivre à 34°C jusqu'à pH 6,0 (environ pH 6,1 à 20° C).

Le produit ainsi obtenu n'est pas stable au café chaud, il y forme une quantité de petits granules de coagulum. Il n'est pas stable non plus à la stérilisation au cours de laquelle il coagule en bloc.

## Exemple comparatif B

On essaye de préparer un produit lacté acidifié à consistance crémeuse en mettant en oeuvre le procédé selon la présente invention, à l'exception du fait que l'on utilise uniquement une culture de Lactobacillus bulgaricus filant au lieu d'un mélange d'une culture de ce microorganisme et d'une culture de Streptococcus épaississant. On réalise trois essais avec trois souches distinctes de Lactobacillus bulgaricus filant qui se prêtent normalement chacune à la mise en oeuvre du procédé en combinaison avec une souche adéquate de Streptococcus épaississant.

Pour chacun de ces trois essais, on prépare une suspension aqueuse lactée en mélangeant 18% de poudre de lait de vache écrémé, 3% d'huile, 0,1% d'extrait de levure et 78,9% d'eau chaude. On préchauffe la suspension à 70°C et on la stérilise à 140°C durant 10 s. On la refroidit à 60-65°C, on ajuste son pH à 7,0 et on l'homogénéise sous 180 bar. On la refroidit et on en remplit un fermenteur d'un litre. On l'inocule avec 20 cm$^3$ d'une culture de l'une des trois souches de Lactobacillus bulgaricus filant suivantes:

i) une souche mutante, distincte quant à la sensibilité aux phages, de la souche CNCM I-800,

ii) une autre souche isolée d'un yogourt du commerce,

iii) la souche CNCM I-800,

chaque culture contenant $10^8$-$10^9$ germes /cm$^3$. On laisse fermenter durant 4 h 20 min - 4 h 30 min à 34°C jusqu'à pH 6,4 (environ pH 6,5 à 20°C).

On obtient trois produits lactés acidifiés qui présentent chacun une viscosité satisfaisante à 20°C, à savoir i) 2,08 mPa.s, ii) 1,92 mPa.s et iii) 2,0 mPa.s. Mais aucun de ces produits ne présente l'onctuosité désirée. Chacun de ces produits présente une texture trop filante que l'on constate par la formation de fils extrêmement fins qui rappellent ceux d'une toile d'araignée.

## Exemple comparatif C

On essaye de préparer un produit lacté acidifié à consistance crémeuse en mettant en oeuvre le procédé selon la présente invention, à l'exception du fait que l'on utilise uniquement une culture de Streptococcus épaississant en lieu et place d'un mélange d'une culture de ce microorganisme et d'une culture de Lactobacillus bulgaricus filant. On réalise trois essais, à des températures de fermentation différentes, avec une souche de Streptococcus épaississant qui se prête normalement à la mise en oeuvre du procédé en combinaison avec une souche adéquate de Lactobacillus bulgaricus filant.

Pour chacun de ces trois essais, on procède de la manière décrite à l'exemple comparatif B jusqu'au remplissage du fermenteur d'un litre avec la suspension aqueuse lactée stérilisée et homogénéisée. On inocule la suspension avec 10 cm$^3$ d'une culture du Streptococcus cremoris épaississant CNCM I-801 contenant $10^8$-$10^9$ germes/cm$^3$, et on laisse fermenter jusqu'à pH 6,4 (environ pH 6,5 à 20°C).

La température de fermentation, le temps nécessaire pour atteindre pH 6,4 et la viscosité à 20°C présentée par les produits lactés obtenus au cours de ces trois essais sont respectivement de 39°C, 3 h 20 min et 1,13 mPas; 36°C, 3 h 30 min et 1,13 mPa.s, 33°C, 4 h 20 min et 1,25 mPas.

Chacun de ces produits présente une onctuosité détectable et satisfaisante en bouche mais une viscosité insuffisante.

### Exemples 2-9

On prépare huit produits lactés acidifiés par fermentation avec huit combinaisons différentes de souches de Lactobacillus bulgaricus filant et de Streptococcus épaississant. Ces combinaisons font intervenir deux souches différentes du premier microorganisme et quatre souches différentes du second, à savoir:

I Une souche de Lactobacillus bulgaricus filant mutante, distincte quant à la sensibilité aux phages, de la souche CNCM I-800.

II Une autre souche de Lactobacillus bulgaricus filant isolée d'un yogourt du commerce

III La souche de Streptococcus cremoris épaississant CNCM I-801.

IV La souche de Streptococcus cremoris épaississant CNCM I-802.

V La souche de Streptococcus cremoris épaississant CNCM I-803.

VI Une autre souche de Streptococcus cremoris épaississant mutante, distincte quant à la texture produite durant l'acidification, d'une souche de Streptococcus cremoris déposée le 21.11.84 à la CNCM où elle porte le No 370.

Pour chacun de ces exemples, on prépare une suspension aqueuse lactée en mélangeant 18% de poudre de lait de vache écrémé, 3% d'huile, 0,1% d'extrait de levure et 78,9% d'eau chaude. On préchauffe la suspension à 70°C et on la stérilise à 140°C durant 10 s. On la refroidit à 60-65°C, on ajuste son pH à 7,0 et on l'homogénéise sous 180 bar. On la refroidit et on en remplit un fermenteur de 1 litre. On l'inocule avec 20 cm$^3$ d'une des deux cultures de Lactobacillus bulgaricus ci-dessus (I et II) et avec 0,5 cm$^3$ d'une des quatre cultures de Streptococcus épaississant ci-dessus (III, IV, V et VI), chaque culture contenant $10^8$-$10^9$ germes / cm$^3$.

On laisse fermenter à 34°C durant 4 h - 4 h 30 min jusqu'à pH 6,4 (environ pH 6,5 à 20°C). Le temps de fermentation exact pour chaque combinaison et la viscosité des produits obtenus sont indiqués ci-après sous forme de tableau:

| Exemple No | Combinaison L + S | Durée de fermentation ( h et min ) | Viscosité (mPa.s) |
|---|---|---|---|
| 2 | I + III | 4 h 15 | 1,83 |
| 3 | I + IV | 4 h 25 | 1,87 |
| 4 | I + V | 4 h 25 | 1,83 |
| 5 | I + VI | 4 h 25 | 1,83 |
| 6 | II + III | 4 h 05 | 1,92 |
| 7 | II + IV | 4 h 20 | 1,92 |
| 8 | II + V | 4 h 30 | 1,92 |
| 9 | II + VI | 4 h 15 | 1,92 |

Chacun de ces huit produits présente une consistance crémeuse et en particulier une onctuosité en bouche comparable à celle de la crème liquide fraîche de lait de vache. Chacun de ces huit produits est également stable au café chaud, à la stérilisation et à la conservation.

## Revendications

1. Procédé de fabrication d'un produit lacté acidifié à consistance crémeuse, dans lequel:

a) on prépare une suspension aqueuse lactée présentant une teneur en matière sèche de 7-45% en poids, dont:

    – 0,03-22,5% de matière grasse, et

    – 6,97-22,5% de solides non gras comprenant des protéines et des sucres fermentescibles,

b) on ajuste le pH de la suspension à 6,8-7,4, et

c) on acidifie la suspension par fermentation durant 1,5-10 h avec une combinaison de souches de Lactobacillus bulgaricus filant et de Streptococcus épaississant, jusqu'à ce que le pH soit de 6,2-6,5 à 18-22°C,

lesdites souches de Lactobacillus filant et de Streptococcus épaississant étant susceptibles d'acidifier une suspension lactée à partir d'un pH neutre jusqu'à un pH désiré de environ 6,2-6,5 tout en produisant suffisamment d'agents filants et épaississants pour conférer à la suspension lactée une consistance crémeuse.

2. Procédé selon la revendication 1, dans lequel on réalise la fermentation à 30-40°C durant 2-6 h.

3. Procédé selon la revendication 1, dans lequel la souche de Streptococcus épaississant est l'une des souches Streptococcus cremoris CNCM I-801, CNCM I-802 et CNCM I-803.

4. Procédé selon la revendication 1, dans lequel la souche de Lactobacillus bulgaricus filant est la souche Lactobacillus bulgaricus CNCM I-800.

5. Procédé selon la revendication 1, dans lequel on conditionne la suspension acidifiée en emballage hermétique et on la stérilise à 110-130°C durant 1-60 min.

6. Produit lacté acidifié susceptible d'être obtenu par le procédé selon la revendication 1, présentant:

i) une consistance crémeuse,

ii) une viscosité de 1,6-4,2 mPa.s à 18-22°C,

iii) un pH de 6,2-6,5 à 18-22°C, et

iv) une teneur en matière sèche de 7-45% en poids, dont:

– 0,03-22,5% de matière grasse, et

– 6,97-22,5% de solides non gras comprenant des protéines, des sucres et des agents filant et épaississant non ajoutés.

## Claims

1. A process for the production of an acidified milk product of creamy consistency, in which

a) an aqueous milk suspension having a dry matter content of 7 to 45% by weight including

– 0.03 to 22.5% fats and

– 6.97% to 22.5% non-fat solids comprising proteins and fermentable sugars is prepared,

b) the pH of the suspension is adjusted to 6.8 to 7.4 and

c) the suspension is acidified by fermenation for 1.5 to 10 h with a combination of strains of ropy Lactobacillus bulgaricus and thickening Streptococcus until the pH is in the range from 6.2 to 6.5 at 18 to 22°C, the strains of ropy Lactobacillus and thickening Streptococcus being capable of acidifying a milk suspension from a neutral pH to a desired pH of approximately 6.2 to 6.5 while producing sufficient ropy and thickening agents to give the milk suspension a creamy consistency.

2. A process as claimed in claim 1, in which fermentation is carried out for 2 to 6 hours at a temperature of 30 to 40°C.

3. A process as claimed in claim 1, in which the strain of thickening Streptococcus is one of the Streptococcus cremoris strains CNCM I-801, CNCM I-802 and CNCM I-803.

4. A process as claimed in claim 1, in which the strain of ropy Lactobacillus bulgaricus is the Lactobacillus bulgaricus strain CNCM I-800.

5. A process as claimed in claim 1, in which the acidified suspension is packaged in a hermetic pack and sterilized for 1 to 60 minutes at a temperature of 110 to 130°C.

6. An acidified milk product obtainable by the process claimed in claim 1 having

i) a creamy consistency,

ii) a viscosity of 1.6 to 4.2 mPa.s at 18 to 22°C,

iii) a pH of 6.2 to 6.5 at 18 to 22°C and

iv) a dry matter content of 7 to 45% by weight including

– 0.03 to 22.5% fats and

– 6.97% to 22.5% non-fat solids comprising proteins, sugars and non-added ropy and thickening agents.

## Patentansprüche

1. Verfahren zur Herstellung eines Sauermilchproduktes mit rahmiger Konsistenz, bei welchem man:

(a) eine wässerige Milchsuspension herstellt, welche einen Gehalt an Tockensubstanz von 7 bis 45 Gew.% aufweist, wovon:

– 0,03 bis 22,5 % Fett sind, und wovon

– 6,97 bis 22,5 % Nichtfett-Feststoffe sind, welche Proteine und vergärbare Zicker umfassen;

(b) den pH-Wert der Suspension auf 6,8 bis 7,4 einstellt und

(c) die Suspension durch Fermentation während 1,5 bis 10 h mit einer Kombination von Stämmen von fadenziehendem Lactobacillus bulgaricus und von eindickendem Streptococcus so lange ansäuert, bis der pH-Wert bei 18 bis 22° C 6,2 bis 6,5 beträgt,

wobei die gennanten Stämme von fadenziehendem Lactobacillus und von eindickendem Streptococcus befähigt sind, eine Milchsuspension ausgehend von einem neutralen pH-Wert bis zu einem gewünschten pH-Wert von etwa 6,2 bis 6,5 anzusäuern, und zwar unter gleichzeitiger Erzeugung von ausreichenden Mengen von fadenziebenden Mitteln und und von Verdickungsstoffen, um der Milchsuspension eine rahmige Konsistenz zu verleiben.

2. Verfahren nach Anspruch 1, bei welchem man die Fermentation bei 30 bis 40° C während 2 bis 6 h durchflührt.

3. Verfahren nach Anspruch 1, bei welchem der Stamm des eindickenden Streptococcus einer der Stämme Streptococcus cremoris CNCM I-801, CNCM I-802 und CNCM I-803 ist.

4. Verfahren nach Anspruch 1, bei welchem der Stamm des fadenziehenden Lactobacillus bulgaricus der Stamm Lactobacillus bulgaricus CNCM I-800 ist.

5. Verfahren nach Anspruch 1, bei welchem man die angesäuerte Suspension in einer hermetischen Verpackung verpackt und dieselbe während 1 bis 60 min bei 110 bis 130° C sterilisiert.

6. Sauermilchprodukt, welches nach dem Verfahren nach Anspruch 1 erhalten werden kann, und welches aufweist:

i) eine rahmige Konsistenz;

ii) eine Viskosität von 1,6-4,2 mPa.s bei 18-22° C,

iii) einen pH-Wert von 6,2-6,5 bei 18-22° C, und

iv) einen Gehalt an Trockensubstanz von 7 bis 45 Gew.-%, wovon:

   − 0,03 bis 22,5 % Fett sind, und wovon

   − 6,97 bis 22,5 % Nichtfett-Feststoffe sind, welche Proteine, Zucker und nicht zugesetzte, fadenziehend Mittel und Verdickungsstoffe umfassen.